(19) Europäisches Patentamt
European Patent Office
Office européen des brevets

(11) Publication number: 0 345 385
A1

(12) **EUROPEAN PATENT APPLICATION**

(21) Application number: 88201189.3

(22) Date of filing: 09.06.88

(51) Int. Cl.4: C09J 3/12 , C08L 9/10 , C08L 33/06 , C08L 27/04 , C08L 31/04 , B05D 7/04

(43) Date of publication of application: 13.12.89 Bulletin 89/50

(84) Designated Contracting States: ES GR

(71) Applicant: THE DOW CHEMICAL COMPANY
2030 Dow Center Abbott Road P.O. Box 1967
Midland Michigan 48640-1967(US)

(72) Inventor: Makati, Ashok C.
705 Chapel Lane
Midland Michigan 48640(US)
Inventor: Kan, Charles S.
1110 Sylvan Lane
Midland Michigan 48640(US)
Inventor: Iwamasa, Robert T.
5201 Campau Drive
Midland Michigan 48640(US)
Inventor: Lee, Do Ik
5109 Nakoma Drive
Midland Michigan 48640(US)

(74) Representative: Smulders, Theodorus A.H.J., Ir. et al
Vereenigde Octrooibureaux Nieuwe Parklaan 107
NL-2587 BP 's-Gravenhage(NL)

# (54) Latex adhesives for substrates, method of adhesing substrates and laminates.

(57) The adhesive of the present invention includes latexes with an adhesion promoter which is preferably polyamidoamine. The addition of the polyamidoamine improves the adhesive strength between substrates such as between two plastic films or between a plastic film and paperboard. The present invention also relates to an adhesive prepared from a latex which is neutralized with a particular base and a hydrophobic polyamidoamine having particular amine values and viscosity whereby the strength of the adhesive bond is increased in humid conditions. The present invention also relates to an adhesive which is stable in the presence of water containing high levels of ions.

EP 0 345 385 A1

## LATEX ADHESIVES FOR SUBSTRATES, METHOD OF ADHESING SUBSTRATES AND LAMINATES

The present invention relates to an adhesive prepared from polymeric adhesion promoters such as polyamidoamine, and latexes. The adhesive is useful between various substrates such as between plastic films.

Most plastic film is adhered to other plastic films and paperboard by use of solvent based adhesives and not by use of aqueous based systems such as latex systems.

The increased need for water-based adhesives in an attempt to eliminate solvent emissions necessitates an efficient and economical method of latex application to bond plastic substrates, such as plastic film, to plastic films, to paperboard or to other substrates without sacrificing the strength of the bond.

Some packaging specifications which utilize such adhesives also require humidity resistance of the adhesive bond. An adhesive which would provide to the bond the necessary humidity resistance would also be desirable when necessary.

Accordingly, the present invention is a latex adhesive for substrates which comprises: (a) a latex, and (b) polyamidoamine, present in an amount sufficient to promote adherence of the surface of a first substrate to the surface of a second substrate of the same or different material.

In another embodiment, the present invention is a method of adhering plastic substrates which comprises:

(a) providing a first plastic substrate having at least one major surface;

(b) applying to the major surface, a latex adhesive, comprising:

(i) a latex, and

(ii) polyamidoamine, present in an amount sufficient to promote adherence of the first plastic substrate to a second substrate of the same or different mateial and

(c) adhering a surface of the second substrate of the same or different material to the major surface of the first plastic substrate having the latex adhesive thereon.

A laminate prepared with the adhesive is an additional embodiment of the invention.

Surprisingly, the latex adhesives of the present invention produce a strong bond between the substrates. The bond is particularly strong between two plastic substrates, and between a plastic substrate and paperboard.

Another embodiment of the present invention is an adhesive for substrates comprising a latex and polyamidoamine the improvement comprising a latex neutralized with a basic solution which is less detrimental to humid strength than sodium hydroxide, such as ammonium hydroxide, to a pH of at least 8, and employing a polyamidoamine having a viscosity of from 500 to 150,000 (50 to 15,000 Pa•s) at 25 °C and 20 RPM and an amine value of from 90 to 350 mg KOH/g, whereby the bond formed between the substrates by the adhesive has moisture resistance in humid environments.

In another embodiment the present invention is a method of adhering substrates which comprises:

(a) providing a first substrate having at least one major surface;

(b) applying to the major surface, a latex adhesive, comprising:

(i) a latex which has been neutralized with a basic solution that is less detrimental to humid strength than sodium hydroxide, to a pH of at least 8, and

(ii) polyamidoamine, having a viscosity of from 500 to 150,000 poise (50 to 15,000 Pa•s) at 25 °C and 20 RPM and an amine value of from 90 to 350 mg KOH/g present in an amount sufficient to promote adherence of the first substrate to a second substrate of the same or different material and

(c) adhering a surface of the second substrate of the same or different material to the major surface of the first substrate having the latex adhesive thereon whereby the bond formed between the substrates by the adhesive has moisture resistance in humid environments.

Surprisingly, the latex adhesives employing the more specific polyamidoamine and neutralent of the present invention produce a strong bond between the substrates in humid environments. The bond is particularly strong between two plastic substrates, and between a plastic substrate and paperboard.

The adhesive lamination process generally consists of coating a primary web or substrate with a latex adhesive by using a gravure type equipment and subsequently drying the adhesive and then laminating the coated primary web or substrate to a secondary web or substrate using a heating nip and then applying pressure. Other coating techniques known in the art are also applicable. Sometimes, it is necessary to clean

the coating equipment after the lamination process with locally available water. If the locally available water is hard, i.e., it has a high level of ions, such as calcium and magnesium, a latex adhesive comprising a latex and a polyamidoamine may coagulate upon contact with the hard water.

Accordingly, another embodiment of this invention is a latex adhesive which is stable in the presence of water containing high ion concentration. Such a latex adhesive comprises: (a) a latex, (b) a polyamidoamine which is present in an amount which is sufficient to promote adherence of the surface of a first substrate to the surface of a second substrate of the same or different material and (c) a surfactant which is present in an amount sufficient to stabilize the latex adhesive in the presence of water containing high levels of ions. In a preferred embodiment of this invention, the surfactant is present in an amount of from 0.5 to 5 parts per 100 parts by weight of dry latex solids.

In another embodiment, the present invention is a latex adhesive for substrates comprising a latex, a polyamidoamine and a surfactant, wherein the latex has been neutralized with a basic solution which is less detrimental to humid strength than sodium hydroxide, such as ammonium hydroxide, to a pH of at least 8 and wherein the polyamidoamine has a viscosity of from 500 to 150,000 poise (50 to 15,000 Pa•s) at 25° C and 20 RPM and an amine value of from 90 to 350 mg KOH/g, whereby the bond formed between the substrates by the adhesive has moisture resistance in humid environments.

Suitable surfactants include, for example, DOWFAX® 8390, Polywet® KX-4, and Igepal® CO-630, all of which are defined later. These surfactants significantly improve the stability of the adhesives in the presence of hard water without adversely affecting the peel strength.

The term "substrate" means any solid material having a surface which can be adhered to a complimentary surface of another substrate of the same or different material with the present latex and polyamidoamine adhesive composition. The term substrate is inclusive of any type of naturally occurring and synthetic solid materials. Representative examples of such solid materials and their forms include the following: plastic, plastic film, paper, paperboard, fabrics, wood, glass, ceramic, metal, foil, metallized plastic film, or most any other solid in the form of a film, sheet, board or block.

The term "plastic substrates" is inclusive of all conventional plastic substrates, for example, polyolefin films, such as polypropylene and polyethylene, as well as polyester film or polyamide film.

Plastic substrates generally have low energy surfaces and are difficult to adhere to other substrates. Therefore, the surfaces are normally activated by flame oxidation, corona discharge, and chemical etching or primer coatings in an attempt to improve adhesion.

The term "laminate" as used herein, is meant to include structures which are manufactured by lamination, using the present latex and polymeric adhesion promoter adhesive as the laminating adhesive. A laminate structure is typically comprised of substrates which are laminated to other substrates of the same or different materials. The film laminate structure is typically comprised of films which are laminated to each other by coating the primary film or web with the present adhesive. The secondary web is then laminated to the primary web after the adhesive is dried.

The term "latex" is inclusive of all conventional water-based latexes. Representative latexes include styrene/butadiene copolymers; vinyl acetate homopolymer and copolymers; vinylidene chloride/butadiene copolymers; vinylidene chloride copolymers; vinyl chloride copolymers; and acrylate and methacrylate homopolymers and copolymers.

The latexes of the present invention may be prepared by conventional methods such as emulsion polymerization.

Typical monomers that could be employed to produce homopolymer or copolymer latexes to be used in a laminating adhesive system of the present invention, include monovinyl aromatic monomer, aliphatic conjugated diene, acrylate monomer, a vinylidene halide or vinyl halide monomer, vinyl esters of carboxylic acids containing from 1 to 18 carbon atoms, such as vinyl acetate or vinyl stearate, methacrylonitrile and acrylonitrile. Optionally a monoethylenically unsaturated carboxylic aeid monomer could be used. Crosslinking agents such as divinylbenzene, ethylene glycol dimethacrylate could also be used.

The term "monovinyl aromatic monomer", as used herein, is meant to include those monomers with a radical of the formula

$$CH_2 = \overset{R}{\overset{|}{C}} -$$

(wherein R is hydrogen or a lower alkyl such as an alkyl having from 1 to 4 carbon atoms) attached directly to an aromatic nucleus containing from 6 to 10 carbon atoms, including those wherein the aromatic nucleus is substituted with alkyl or halogen substituents. The preferred monomers are styrene and vinyl toluene.

The term "aliphatic conjugated diene", as used herein, is meant to include compounds such as 1,3-butadiene, 2-methyl-1, 3-butadiene, piperylene (1,3-pentadiene), and other hydrocarbon analogs of 1,3-butadiene.

"Vinylidene halides" and "vinyl halides" suitable for this invention include vinylidene chloride and vinyl chloride, which are highly preferred. Vinylidene bromides and vinyl bromide can also be employed.

The term "acrylate", as used herein, is meant to include the acrylate or methacrylate monomers. Additionally, the acrylates can include acids, esters, amides, and substituted derivatives thereof. Generally, the preferred acrylates are $C_1$-$C_8$ alkyl acrylates or methacrylates. Examples of such acrylates include butyl acrylate, hexyl acrylate, tort-butyl acrylate, methylmethacrylate, butylmethacrylate, hexylmethacrylate, isobutylmethacrylate, and isopropylmethacrylate. The preferred acrylates are butyl acrylate and methylmethacrylate.

The term "monoethylenically unsaturated carboxylic acid monomer", as used herein, is meant to include those monocarboxylic monomers such as acrylic acid, and methacrylic acid; dicarboxylic monomers such as itaconic acid, fumaric acid, maleic acid, and their monoesters.

The resulting latex will be neutralized with a base to a pH of at least 8, preferably 10.5. If a humidity resistant bond is required, some bases such as sodium hydroxide will interfere with humid strength. Therefore, it is necessary to choose a base such as ammonium hydroxide to neutralize the latex if humidity resistance is a specified adhesive property.

The latex is normally present in the adhesive in an amount of at least 80 to at most 99 percent by weight of the total latex adhesive.

Polymeric adhesion promoter

"Polymeric adhesion promoters" typically employable in the present invention include cationic polymers containing an $NH_x$ group such as polyamidoamine wherein x is from 1 to 2.

The preferred adhesion promoter is a polyamidoamine which can be a branched compound, a linear or crosslinked compound or a polyamide or polyamido resin such as is indicated by the following structures.

Linear

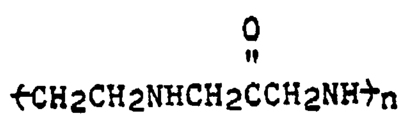

Branched

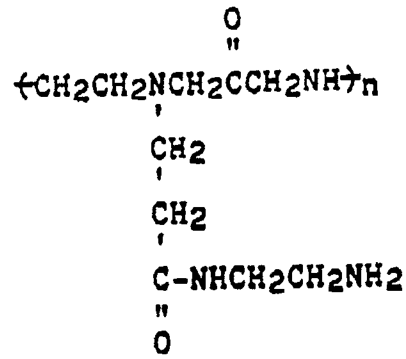

Crosslinked

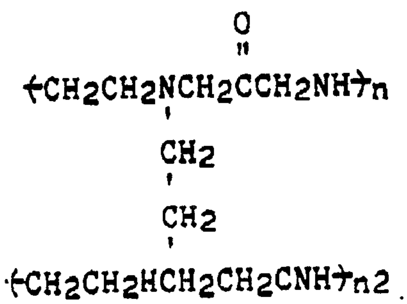

Polyamide

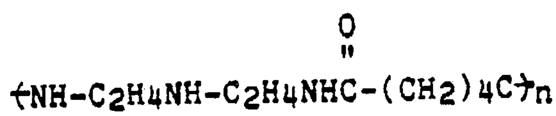

Polyamido Resin

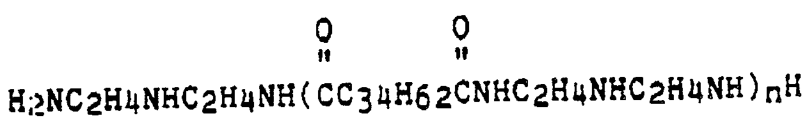

The polyamidoamine can be based on reaction products of dibasic acid and polyamine, or dimer acid and polyamine, or fatty acid and polyamine.

The adhesion promoter may also be a combination of the above-described compounds.

If humidity resistance of the adhesive bond is sought, the preferred polyamidoamine will be hydrophobic, containing an amine value and a molecular weight sufficient to inhibit the water-sensitivity of the polyamidoamine. Typically the appropriate amine value will be from 90 to 350 mg KOH/g. Preferably the amine value will be from 200 to 300 and most preferably from 230 to 250 mg KOH/g. The amine value is determined by the milligrams of potassium hydroxide equivalent to the alkalinity present in one gram of sample. The reactive polyamidoamine is dissolved in nitrobenzene and acetic acid is added. The sample solution is then potentiometrically titrated with standard perchloric acid to determine the amine alkalinity which is the amine value. Additionally, the viscosity of the polyamidoamine should be from 500 to 150,000 poise at 25° C and 20 RPM. Preferably, the viscosity will be from 2,000 to 15,000 and most preferably, the viscosity will be 4,000 poise at 25° C and 20 RPM. The viscosity is determined on a Brookfield RV viscometer at 20 RPM, 25° C, using spindle number 3.

The polyamidoamine is typically post-added to the latex. Normally, polyamidoamine is present in the adhesive in an amount sufficient to promote adherence of a substrate to another substrate of the same or

different material. The optimal amount of polyamidoamine will be at least 1 weight percent and no more than 15 weight percent based upon the weight of the total latex adhesive.

Although the latex adhesives of the present invention may be totally latex-based systems and do not require conventional tackifiers, such conventional tackifiers may be added to the latex polymeric adhesion promoter blend to formulate a latex adhesive. Such tackifiers include natural resin esters and synthetic tackifiers.

These tackifiers are normally added in an amount of up to 80 weight percent of the latex.

The peel adhesion for plastic film to plastic film is measured by a T-Peel test (ASTM D-1876-72) on an Instron. Plastic film to paperboard peel adhesion is measured by pulling the film from the paperboard on an Instron at a 180° peel.

The following examples are intended to illustrate the invention but not to limit the scope thereof. All parts and percentages are based on dry solids by weight unless otherwise indicated.

Example 1

Latex A with a composition of 48.3 parts styrene, 50.0 parts butadiene and 1.7 parts itaconic acid and Latex B with a composition of 48.0 parts styrene, 50.0 parts butadiene, 2.0 parts itaconic acid were formulated. Latex A had a higher degree of crosslinking than Latex B and was only 10 percent soluble in tetrahydrofuran (THF) whereas Latex B was 90 percent soluble in THF. To the above control formulations, 6 percent BOS (based on latex solids) of various types of polymeric adhesion promoters were post-added. All of the formulations were adjusted to 35 percent solids with a 50/50 mixture of isopropanol and water, and a suitable wetting agent. The adhesive formulations were applied to a corona treated polypropylene film (Mobil LCM 410 film) by drawing it down the film using #3 Meyer rod, which is equivalent to applying approximately 1.5 to 2.0 lbs/ream (0.7 to 0.9 kg/ream) (3,000 sq. ft.).

This adhesive coated film was then dried in a forced air oven for approximately three minutes at 50° C, after which the film was laminated to the polypropylene side of a one-sided polyvinylidene chloride-coated 70 gauge polypropylene film, (Mobil 70 PXS), using 25 psi (175 kPa) pressure at 95° C for 5 seconds. The laminates were cut into 1/2 inch (12.7 mm) strips and the peel adhesion was determined on an Instron using T-peel test (ASTM D-1876-72) at 12 inches/minute (305 mm/minute). The results listed in Table I indicate a significant increase in T-peel strength by the incorporation of the above-listed polymeric adhesion promoters in the adhesive formulations based on styrene/butadiene copolymer latexes.

| Polyamidoamine Types used in Table I | |
|---|---|
| 1. | Branched polyamidoamine, based on methyl acrylate and ethylenediamine. |
| 2. | Crosslinked polyamidoamine, based on methyl acrylate and ethylenediamine. |
| 3. | Linear polyamidoamine, based on methyl acrylate and ethylenediamine. |
| 4. | Linear polyamidoamine, based on adipic acid and diethylenetriamine. |
| 5. | Polyamidoamine resin derived from fatty acids and polyamine. |
| 6. | Polyamide resin derived from dimer acids and polyamine. |

TABLE I

| EFFECT ON T-PEEL STRENGTH OF LAMINATES ON ADDING 6 PERCENT OF VARIOUS TYPES OF POLYAMIDOAMINE | | |
|---|---|---|
| | T-Peel Strength, GM/IN (N/m) | |
| Type of Polyamidoamine | Base Latex A from Example 1 | Base Latex B from Example 1 |
| None | 80 (31) | 237 (91) |
| 1 | 298 (115) | 315 (122) |
| 2 | -- | 303 (117) |
| 3 | 236 (91) | 403 (155) |
| 4 | -- | 417 (161) |
| 5 | 97 (37) | -- |
| 6 | 106 (41) | 260 (100) |

Example 2

The latexes listed in the follow Table II were formulated with 6 percent linear polyamidoamine based on adipic acid and diethylenetriamine, and a suitable wetting agent. In this example adhesives were drawn down on corona treated (Hercules B-523) polypropylene films which were then laminated to Mobil's 70 PXS film as described in Example 1. The T-peel strengths of the laminates were determined as described in Example 1. The results are as follows in Table II.

TABLE II

| Latex Type | T-Peel Strength, gm/in (N/m) | |
|---|---|---|
| | Control 0% | 6% Linear Polyamidoamine |
| Styrene/-butadiene/n-butyl acrylate/itaconic acid 36/40/22/2 | 300 (116) | 567 (218) |
| Vinylidene chloride/butadiene/itaconic acid 52/46/2 | 65 (25) | 151 (58) |
| Styrene/n-butyl acrylate/itaconic acid 30/67/3 | 174 (67) | 247 (95) |
| Ethylaorylate/N-methylol acrylamide/acrylamide 96/2.5/1.5 | 79 (30) | 221 (85) |

Example 3

A latex with a composition of 58 parts styrene, 38 parts butadiene and 4 parts acrylic acid was formulated with a suitable wetting agent. Four percent BOS branched polyamidoamine was post-added to the formulation to yield the adhesive. The adhesive was applied to the corona treated side of a 57 gauge polyethylene/polypropylene copolymer film (Mobil 57 AHX) by drawing it down with a #6 Meyer rod. Printed paperboard was laid on the adhesive-coated 57 AHX film and wet laminated before the adhesive was permitted to dry out.

The laminate was passed through the padder to apply pressure and placed in a forced air oven for 3 minutes at 60°C. One-inch (25.4 mm) wide cuts were made through the film and part way through the board. The films were pulled on an Instron at 180° peel and a rate of 12 inches/minute (305 mm/minute) at 72°F (22°C). The resulting peel force was 525 gm/inch (202 N/m), the resulting peel force of the laminate without polyamidoamine was 275 gm/inch (106 N/m).

Example 4

A latex with a composition of 46.0 parts styrene, 50.0 parts butadiene and 4.0 parts acrylic acid was prepared by conventional emulsion polymerization techniques. A 28 percent solution of ammonium hydroxide was added to bring the pH of the latex to 10.0. Three comparative examples, 4A, 4B and 4C were prepared by adding either sodium hydroxide or ammonium hydroxide as specified in Table III, to the latex to bring the pH to 10.0.

A 20 percent solution of polyamidoamine A, which is a polyamidoamine based on condensation products of polyamines and dimer acids, having a viscosity of 4000 poise (400 Pa•s) and an amine value of 240, was prepared by diluting the polyamidoamine using a mixture of 55/45 isopropanol/water. The polyamidoamine was added to the latex while stirring until the polyamidoamine reaches 6 percent based on solids. All the formulations were adjusted to 35 percent solids with a 50/50 mixture of isopropanol and water and suitable wetting agents. The adhesive formulations of Table III were applied to a corona treated polypropylene film (Hercules B523 film) by drawing them down the film using #3 Meyer rod, which is equivalent to applying approximately 1.5 to 2.0 lbs/ream (0.7 to 0.9 kg/ream) (3,000 sq. ft.).

This adhesive-coated film was then dried in a forced air oven for approximately three minutes at 65 °C, after which the film was laminated to the polypropylene side of a one side polyvinylidene chloride coated 70 gauge polypropylene film, (Mobil 70 PXS), using 25 psi (175 kPa) pressure at 95 °C for 5 seconds. The laminates were cut into 1/2 inch (12.7 mm) strips and the peel adhesion was determined on an Instron using T-peel test (ASTM D-1876-72) at 12 inches/minute (305 mm/minute) after conditioning the strips at room temperature (22 °C) and 100 percent relative humidity. Comparative adhesive examples, 4A, 4B, and 4C were made to demonstrate the effect of humidity on laminates using an adhesive outside the scope of the invention. The comparative adhesives consisted of latexes neutralized with sodium hydroxide or ammonium hydroxide and a polyamidoamine, polyamidoamine B, having a viscosity of 150 (15 Pa•s) poise at 25 °C and an amine value of above 350 mg KOH/g. The polyamidoamine B solution was prepared similarly to polyamidoamine A.

The results listed in Table III indicate a significant increase in T-peel strength of the laminates exposed to humid conditions by the incorporation of the above-listed polyamidoamine adhesion promoter in the adhesive formulation based on a styrene/butadiene copolymer latex neutralized with base such as ammonium hydroxide. This is in comparison to those identical latexes neutralized with sodium hydroxide and those identical latexes formulated in an adhesive with a polyamidoamine outside the amine value range of the present invention.

TABLE III

| Neutralization of Base Latex | | | | T-Peel Strength, gm/inch (N/m) | | |
|---|---|---|---|---|---|---|
| Adhesive | Base Type | Types/Level of polyamidoamine | Amine Value | Dry | Humid | Percent Retention |
| 4A* | NaOH | B | 370-400 | 220 (85) | 10 (4) | 4 |
| 4B* | $NH_4OH$ | B | 370-400 | 160 (62) | 50 (19) | 31 |
| 4C* | NaOH | A | 236-240 | 230 (89) | 50 (19) | 21 |
| 4 | $NH_4OH$ | A | 236-240 | 200 (77) | 190 (73) | 95 |

* Comparative Examples, not examples of the invention.

Example 5

A latex with a composition of 47.5 parts styrene, 50.0 parts butadiene and 2.5 parts acrylic acid was prepared by conventional emulsion polymerization technique. The latex was steam-distilled to remove unreacted monomers and neutralized with potassium hydroxide to a pH of 10.0.

To the above latex 2 parts of a surfactant sold under the trademark DOWFAX 8390 of The Dow Chemical Company based on the latex solids was post-added and stirred well. A 15% dispersion polyamidoamine which is a polyamidoamine based on the condensation products of polyamines and dimer acids, having an amine value of 330-360, and a viscosity of 7 to 9 poises at 75 °C was prepared by diluting the polyamidoamine in water. The polyamidoamine was added to the latex containing post-added DOWFAX 8390 surfactant until the polyamidoamine reached 6.0 percent BOS. These formulations were tested for the stability towards hard water to simulate clean-up of adhesive system.

Hard Water Stability Test

To 0.2 gm of the above formulated adhesive, which had been aged for 48 hours, 20 cc of water was added which contained high levels of calcium and other divalent ions (approximately 150 ppm of divalent ions). This mixture of adhesive and hard water was vigorously shaken for 100 seconds at the approximate rate of one shake/second. This mixture was visually examined for the level of coagulation after the 100 shakes and was rated as follows: high coagulation = poor, slight coagulation = fair, and no coagulation = good.

The data listed in Table IV for the comparative adhesive systems in 5D and 5E demonstrate the adhesive characteristics outside the scope of the invention. These adhesive systems consists of latexes with no post-added surfactant or with 2 parts of post-added Alipal® CO-433.

The results listed in Table IV indicate a significant increase in hard water stability by incorporation of either DOWFAX 8390 or Polywet KX-4 or Igepal CO-630 type of surfactant. In comparison to the above systems the same latex with either no post-added surfactant or 2 parts of Alipal CO-433 exhibited poor stability toward hard water. Typically the surfactants are post-added to latex or could be incorporated during conventional emulsion polymerization.

TABLE IV

| Surfactant Type Post-Added to Latex to Formulate Adhesive System | Level of Surfactant Post-Added Based On 100 Parts Latex Solids | Stability of Adhesive System Toward Hard Water Test |
|---|---|---|
| 5A DOWFAX 8390 | 2 | Good |
| 5B Polywet KX-4 | 2 | Good |
| 5C Igepal CO-630 | 2 | Fair |
| 5D Control | 0 | Poor |
| 5E Alipal CO-433 | 2 | Poor |

Igepal CO-630 = Nonylphenoxypoly(ethyleneoxy)Ethanol From GAF Corporation

Alipal CO-433 = Sodium Salt of Sulfated Nonlyphenoxypoly(Ethylenoxy) Ethanol From GAF Corporation

Polywet KX-4 = Potassium Salts of Functionalized Oligomers Produced by Uniroyal

DOWFAX 8390 = A Mixture of the Disodium Salt of Hexadecyl (Sulfophenoxyl) Benzenesulfonic acid and the Disodium Salt of Oxybis(Hexadecylbenzenesulfonic acid)

Example 6

As mentioned earlier, the type and level of surfactant that is post-added to latex during the formulation of adhesive systems should not only improve the stability of adhesive system towards hard water, but also should maintain adequate peel strength. The formulated adhesive system with 2 or 3 parts post-added DOWFAX 8390 was adjusted to 30 percent solids with a 50/50 mixture of isopropanol and water. The adhesive formulations were applied to a corona-treated polypropylene film (Hercules B523 film) by drawing it down the film using #3 Meyer rod, which is equivalent to applying approximately 1.5 to 2.0 lbs/ream (0.7 to 0.9 kg/ream) (3,000 sq. ft.)

This adhesive-coated film was then dried in a forced air over for approximately three minutes at 65°C after which the film was laminated to polypropylene side of a one side polyvinylidene chloride coated 70 gauge polypropylene film, (Mobil 70 PXS). The laminates were cut into 1/2 inch (12.7 mm) strips and the peel adhesion was determined on an Instron using t-peel test (ASTM D-1876-72) at 12 inches/minute (305 mm/minute). The control was made with no post-added surfactant. The results in Table V indicate that an adequate peel strength was maintained on post-addition of additional surfactant.

Table V

| Surfactant Type Post-Added to Formulate The Adhesive System | Level of Surfactant Post-Added Based 100 parts on Latex Solids | Peel Strength gms/in (N/M) |
|---|---|---|
| 6A Control (None) | 0 | 250 (96) |
| 6B DOWFAX 8390 | 2 | 200 (77) |
| 6C DOWFAX 8390 | 3 | 220 (85) |
| DOWFAX 8390 = A Mixture of the Disodium Salt of Hexadecyl(Sulfophenoxyl) Benzenesulfonic acid and the Disodium Salt of Oxybis(Hexadecylbenzenesulfonic acid) | | |

## Claims

1. A latex adhesive for substrates which comprises:
(a) a latex, and
(b) a polyamidoamine, present in an amount sufficient to promote adherence of the surface of a first substrate to the surface of a second substrate of the same or different material.

2. A latex adhesive as claimed in Claim 1 wherein the latex is selected from the group consisting of styrene/butadiene copolymers; vinyl acetate homopolymers and copolymers; vinylidene chloride/butadiene copolymers; vinylidene chloride copolymers; vinyl chloride copolymers; and acrylate and methacrylate homopolymers and copolymers.

3. A latex adhesive as claimed in Claim 1 wherein the latex is present in an amount of from 80 to 99, and the polyamidoamine is present in an amount from 20 to 1 weight percent of the total latex adhesive.

4. A latex adhesive as claimed in Claim 1 wherein the latex additionally comprises a tackifier in an amount of up to 80 weight percent based on the weight of the latex.

5. A latex as claimed in Claim 1 wherein the latex is neutralized with a solution of ammonium hydroxide to a pH of at least 8, and the polyamidoamine has a viscosity of from 500 to 150,000 poise (50 to 15,000 Pa•s) at 25° C and 20 RPM and an amine value of from 90 to 350 mg KOH/g.

6. A latex adhesive as claimed in any one of Claims 1 to 5, further comprising a surfactant in an amount sufficient to stabilize the latex adhesive in the presence of water containing high levels of ions.

7. A latex adhesive as claimed in Claim 6 wherein the surfactant is selected from the group consisting of
(a) surfactant comprising a mixture of the disodium salt of hexadecyl (sulfophenoxyl) benzenesulfonic acid and the disodium salt of oxybis (hexadecylbenzenesulfonic acid);
(b) nonylphenoxypoly (ethyleneoxy) ethanol; and
(c) potassium salts of functionalized oligomers.

8. A latex adhesive as claimed in Claim 7 wherein the surfactant is present in an amount of from 0.5 to 5 parts per 100 parts of latex solids.

9. A method of adhering plastic substrates which comprises;
(a) providing a first plastic substrate having at least one major surface;
(b) applying to the major surface, a latex adhesive, comprising:
(i) a latex, and
(ii) polyamidoamine, present in an amount sufficient to promote adherence of the first plastic substrate to a second substrate of the same or different material and
(c) adhering a surface of the second substrate of the same or different material to the major surface of the first plastic substrate having the latex adhesive thereon.

10. A method of adhering substrates which comprises:
(a) providing a first substrate having at least one major surface;
(b) applying to the major surface, a latex adhesive, comprising:
(i) a latex which has been neutralized with a basic solution less detrimental to humid strength than sodium hydroxide to a pH of at least 8, and

(ii) polyamidoamine having a viscosity of from 500 to 150,000 poise (50 to 15,000 Pa•s) at 25°C and 20 RPM and an amine value of from 90 to 350 mg KOH/g present in an amount sufficient to promote adherence of the first substrate to a second substrate of the same or different material and

(c) adhering a surface of the second substrate of the same or different material to the major surface of the first substrate having the latex adhesive thereon whereby the bond formed between the substrates by the adhesive has moisture resistance in humid environments.

11. A method as claim in Claim 9 or 10 wherein the latex adhesive further comprises a surfactant selected from the group consisting of

(a) a surfactant comprising a mixture of the disodium salt of hexadecyl (sulfophenoxyl) benzenesulfonic acid and the disodium salt of oxybis (hexadecylbenzenesulfonic acid);

(b) nonylphenoxypoly (ethyleneoxy) ethanol; and

(c) potassium salts of functionalized oligomers; and

said surfactant is present in an amount sufficient to stabilize the latex adhesive in the presence of water containing high levels of ions.

12. A laminate prepared with an adhesive as claimed in Claim 8.

European Patent Office

# EUROPEAN SEARCH REPORT

Application Number

EP 88 20 1189

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 728 737 (WITTCOFT) * Claims 1,5; example 1; column 6, lines 26-31,59-71; column 7, lines 56-65; column 9, line 61 - column 10, line 8 * ----- | 1,9 | C 09 J 3/12<br>C 08 L 9/10<br>C 08 L 33/06<br>C 08 L 27/04<br>C 08 L 31/04<br>B 05 D 7/04 |
| | | | TECHNICAL FIELDS SEARCHED (Int. Cl.4) |
| | | | C 08 L<br>C 09 J<br>C 08 K |

The present search report has been drawn up for all claims

| Place of search | Date of completion of the search | Examiner |
|---|---|---|
| THE HAGUE | 27-01-1989 | SCHUELER D.H.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document